(19) **Europäisches Patentamt** / **European Patent Office** / **Office européen des brevets**

(11) **EP 2 364 485 B1**

(12) **FASCICULE DE BREVET EUROPEEN**

(45) Date de publication et mention de la délivrance du brevet:
**04.09.2019 Bulletin 2019/36**

(21) Numéro de dépôt: **09752394.8**

(22) Date de dépôt: **15.09.2009**

(51) Int Cl.:
***G06K 19/06*** *(2006.01)*

(86) Numéro de dépôt international:
**PCT/FR2009/001096**

(87) Numéro de publication internationale:
**WO 2010/034897 (01.04.2010 Gazette 2010/13)**

(54) **PROCÉDÉ ET DISPOSITIF D'AUTHENTIFICATION DE CODES GÉOMÉTRIQUES**

VERFAHREN UND VORRICHTUNG ZUR AUTHENTIFIZIERUNG VON GEOMETRISCHEN KODES

METHOD AND DEVICE FOR AUTHENTICATING GEOMETRICAL CODES

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.09.2008 FR 0805214**
**27.11.2008 FR 0806673**

(43) Date de publication de la demande:
**14.09.2011 Bulletin 2011/37**

(73) Titulaire: **Advanced Track And Trace**
**92504 Rueil-Malmaison Cedex (FR)**

(72) Inventeurs:
• **PICARD, Justin**
**92504 Rueil-Malmaison Cedex (FR)**
• **SAGAN, Zbigniew**
**92500 Rueil-Malmaison Cedex (FR)**
• **FOUCOU, Alain**
**92500 Rueil-Malmaison Cedex (FR)**
• **MASSICOT, Jean-Pierre**
**92500 Rueil-Malmaison Cedex (FR)**

(74) Mandataire: **Cornuejols, Georges et al**
**Cassiopi**
**230 Avenue de l'Aube Rouge**
**34170 Castelnau-le-Lez (FR)**

(56) Documents cités:
**WO-A-2008/003964**

**Description**

La présente invention concerne un procédé et un dispositif d'authentification de codes géométriques. Elle d'applique, en particulier, aux codes à barres en une dimension (dits « 1D »), en deux dimensions (dits « 2D »), voire en trois dimensions (« 3D ») et au Data Matrix (marque déposée).

Le code Data Matrix est une symbologie de code à barres bidimensionnelle à haute densité, permettant de représenter une quantité importante d'informations sur une surface réduite, jusqu'à 2 335 caractères alphanumériques ou 3 116 caractères numériques, sur environ 1 cm². Le code Data Matrix est dans le domaine public. Le Data Matrix se présente sous la forme d'une matrice constituée de points ou de carrés juxtaposés.

Le code Data Matrix répond à la norme ISO IEC16022. Selon cette norme, le symbole Data Matrix peut contenir des niveaux de robustesse, connus sous le nom de vérification et correction d'erreur ou « ECC » (acronyme de « Error Check Correction »), différents qui lui permettent d'être lu même en étant partiellement dégradé ou occulté. Il existe plusieurs variantes du Data Matrix admises par la norme : du ECC000 qui n'offre aucune robustesse si le symbole est dégradé, à l'instar des codes à barres 1D (EAN 13...) au ECC200 qui offre le niveau de sécurité maximal (lecture possible d'un symbole occulté jusqu'à environ 20 %).

Le domaine principal d'application du Data Matrix est le marquage de très petites pièces mécaniques ou électroniques. Il est utilisé, entre autres, par la NASA (acronyme de « National Agency for Space and Aeronautics » ou agence nationale pour l'aéronautique et l'espace), pour le marquage de chacune des pièces composant les navettes spatiales. Dans les applications courantes, il est utilisé pour l'affranchissement du courrier dans certains pays, comme la Suisse, et plus récemment pour certaines applications de téléphonie mobile, il est alors souvent surnommé « Tag » (ou étiquette). Flashcode (marque déposée) est une implémentation commerciale propriétaire utilisant la norme Data Matrix.

Le Data Matrix ECC200 fait partie des standards adopté par GS1 (acronyme de « Global Standard » pour standard global) et un avis récent de l'AFSSAPS (acronyme de « Agence Francaise de Sécurité Sanitaire des Produits de Santé ») indique que, d'ici janvier 2011, tous les médicaments soumis à une autorisation de mise sur le marché devront comporter, en plus des mentions légales actuelles, un code 2D Data Matrix contenant un certain nombre d'informations prédéfinies.

Le Data Matrix a été conçu pour maximiser la quantité de données stockables sous forme d'image, de façon à ce que le décodage par machines, ou lecteurs, de ces données (sur la base d'une capture d'image) soit rapide et fiable. Il n'a cependant pas été conçu pour sécuriser les données stockées, alors que cette problématique se pose de plus en plus.

Ainsi, le décodage du Data Matrix se fait selon un standard ouvert, et n'incorpore pas de clé cryptographique pour chiffrer et/ou appliquer une signature numérique aux données. Cependant, les données du message stocké peuvent être chiffrées ou signées numériquement avant d'être modulées pour former le Data Matrix. Ainsi, on peut garantir la source et l'intégrité d'un message, sans qu'il ne soit possible à quiconque de falsifier un message légitime (modifier son contenu) ou de se faire passer pour l'auteur d'un message légitime.

Cependant, les techniques cryptographiques n'offrent pas de protection contre la reproduction exacte à l'identique, ou « clonage », des données d'un Data Matrix. Or, dans de nombreuses applications d'anti-contrefaçon, il est essentiel de pouvoir se protéger contre ces copies à l'identique, car le contrefacteur peut sans difficulté faire une copie parfaite d'un document, emballage, ou autre objet comportant un Data Matrix, s'il ne contient pas d'éléments anti-copie. Certaines applications de traçabilité (en anglais : « track and trace ») permettent de tracer, à tous les niveaux de la chaîne de distribution, les produits par le code identifiant contenu dans le Data Matrix : elles peuvent ainsi déterminer la présence de duplicatas si un code identifiant est retrouvé plus d'une fois, ou encore déterminer des anomalies dans la distribution si le code identifiant pointe vers un produit qui devrait se trouver à un autre endroit de la chaîne de distribution.

Il est certain qu'une traçabilité unitaire à tous les niveaux de la chaîne de distribution est une aide contre la contrefaçon, même si ultimement, elle ne permet pas de déterminer lequel de deux produits apparemment identiques est l'original. Cependant, dans la majorité des cas, un tel système de traçabilité est trop coûteux, voire tout simplement impossible à mettre en place du fait qu'il doit être centralisé pour que deux produits portant le même Data Matrix trouvés en deux endroits différents puissent être identifiés comme tels.

C'est pourquoi les détenteurs de droits qui utilisent des Data Matrix, utilisent souvent d'autres moyens pour s'assurer de l'authenticité d'un document ou produit. Par exemple, plusieurs solutions sont basées sur des labels sécurisés, qui combinent un authentifiant tel qu'un hologramme ou un OVD (acronyme de « Optically Variable Device » pour dispositif optiquement variable) placé à proximité du Data Matrix.

Malheureusement, les moyens utilisés sont généralement coûteux et peu efficaces. Coûteux, parce que plusieurs des technologies d'authentification nécessitent des technologies avancées pour la construction d'effets optiques. Peu efficaces, car de plus en plus, les effets optiques peuvent être imités avec suffisamment de précision à moindre coût. De plus, ces effets ne protègent pas intrinsèquement le code d'identification. Par exemple, si un ensemble de documents contenant le moyen d'authentification est volé, des codes Data Matrix arbitraires peuvent lui être appliqués.

Le Data Matrix peut être « sécurisé » contre la copie en le marquant, par exemple, avec des encres spéciales. Cependant, les contrefacteurs parviennent à se procurer des encres spéciales de plus en plus facilement, et cette solution n'est pas véritablement sécuritaire, tout en étant coûteuse. Aussi, pour de nombreuses applications, les Data Matrix sont marqués par ablation laser.

Le document US 2008/0252066 propose d'imprimer des codes barre 2D multi-couleurs, la lecture et/ou l'authentification nécessitant l'illumination du code imprimé par différentes sources lumineuses et/ou filtres spectraux. Malheureusement, l'utilisation de plusieurs encres est coûteuse et complexe en production, et nécessite des moyens spécialisés de capture d'image pour la détection, ce qui limite les possibilités d'authentification. D'autre part, une telle approche n'offre pas une grande sécurité contre un adversaire déterminé, qui peut facilement retrouver les types d'encres utilisés, et déterminer les codes imprimés avec l'éclairage spectral approprié.

Le document US 2008/110990 propose d'appliquer une rotation à la tête d'impression, dont l'effet peut, par la suite, être détecté et mesuré sur la base d'une capture d'image d'une impression d'un code barre. Cependant, ce document admet implicitement que le procédé qu'il décrit ne permet de détecter que les copies réalisées avec un moyen d'impression ne permettant pas de rotation de la tête d'impression. Ainsi, cette invention n'offre pas de réelle protection contre des contrefaçons réalisées avec le même moyen d'impression, et est contraignante car elle impose l'utilisation d'un moyen d'impression particulier, ce qui limite fortement son utilisation.

Le document WO 2008/003964 propose des méthodes permettant d'introduire un second niveau d'information dans les codes barre 1D et 2D en faisant varier les éléments porteurs d'informations pour qu'ils représentent le second niveau d'information, par exemple en élargissant ou en diminuant la taille des cellules d'un Data Matrix, ou en rognant, ou non, les extrémités de ses cellules noires. Cette approche résout une partie des défauts de l'art antérieur, car le second niveau d'information, pouvant être utilisé pour l'authentification, est inséré au moment de l'impression, ce qui est pratique et peu coûteux. Elle est sécuritaire vis-à-vis de contrefacteurs ignorant la mise en oeuvre de ce procédé, et ne s'appliquant qu'à dupliquer le code barre en reproduisant l'information de premier niveau. Cependant, le second niveau peut aisément être copié à l'identique par un contrefacteur informé de sa présence. Ce document indique, d'ailleurs, que le second niveau d'information est copiable par un moyen d'impression de bonne qualité, même si la sensibilité à la copie est maximisée (voir page 12, lignes 9-12 de ce document).

La présente invention vise à remédier à ces inconvénients. En particulier, elle concerne des méthodes permettant d'inclure un second niveau d'information, par le même procédé d'impression qui imprime le code barre, ce second niveau d'information, étant, contrairement à l'enseignement du document précédemment cité, physiquement et mathématiquement impossible à copier.

A cet effet, selon un premier aspect, la présente invention vise un procédé d'authentification d'un code à zones géométriques de formes et/ou couleurs variables en fonction d'un message, selon la revendication 1.

Ainsi, la présente invention permet d'authentifier directement un code barre 2D, sur la base d'une image de celui-ci, par des moyens purement numériques, tout en laissant lisible ce code barre 2D.

On rappelle ici que les codes numériques authentifiants, aussi appelés par la suite « CNA », sont des images numériques qui, une fois marquées sur un support, par exemple par impression ou modification locale du support, présentent des propriétés en général mesurables automatiquement à partir d'une image captée, qui sont modifiées lors de leur copie. Les codes numériques authentifiants se basent généralement sur la dégradation d'au moins un signal sensible à la copie, un tel signal étant porté par des éléments d'image aux caractéristiques mesurables sensibles à la copie.

Ainsi, une zone géométrique comportant une partie du code numérique authentifiant présente une caractéristique de marquage variable adaptée à être globalement détériorée lors d'une copie de ladite zone géométrique.

Certains types de codes numériques authentifiants peuvent également contenir de l'information permettant d'identifier ou tracer le document qui le contient. Les CNA sont extrêmement avantageux pour la détection de copie. En effet, ils sont extrêmement peu coûteux à produire, très faciles à intégrer, et peuvent être lus par une machine ayant des moyens de capture d'image, tout en pouvant offrir une grande sécurité contre la copie. Grâce à la mise en oeuvre de la présente invention, un code à zone géométriques, par exemple à barres, est indissociablement lié à un CNA.

On observe que la présente invention présente des avantages par rapport à la simple juxtaposition d'un code à zones géométriques et d'un CNA. D'une part, cette dernière approche impliquerait l'impression de deux codes à des moments différents sur le document, ce qui consommerait de l'espace et rendrait le procédé de production des documents sécurisés plus complexe. D'autre part, l'authentification demanderait la capture de deux images, l'une du CNA et l'autre du code à zones géométriques, ce qui rendrait la procédure de lecture moins pratique. Finalement, un contrefacteur parvenant à se procurer un certain nombres de documents munis du CNA avant impression du Data Matrix, ou parvenant à se procurer la plaque d'impression ou un fichier contenant le CNA d'origine, serait en mesure de générer des document « authentiques », en clonant des Data Matrix authentiques associé au CNA.

On observe que l'étape de formation d'une image peut, par exemple, comporter une impression, une ablation de matière, un transfert solide ou une modification physique ou chimique locale, par exemple sous l'effet de la chaleur.

Selon des caractéristiques particulières, l'étape de formation d'une image affecte, du fait des aléas physiques de la formation d'image, la représentation du code numérique authentifiant d'un taux d'erreur supérieur à une première valeur prédéterminée et inférieure à une deuxième valeur prédéterminée.

On rappelle ici que les codes numériques authentifiants (« CNA ») sont composés de différents éléments prenant des valeurs discrètes. Dans le cas de valeurs binaires, les éléments peuvent être représentés par une cellule d'une couleur noire (imprimée) ou blanche (non-imprimée). Lors de la détection, on détermine un taux d'erreur qui correspond au taux de cellules contenant une valeur incorrecte. On note que le taux d'erreur est directement lié au rapport de l'énergie du signal sur l'énergie du bruit.

Par exemple, la première valeur prédéterminée vaut 10 % et la deuxième valeur prédéterminée vaut 35 %.

Selon la revendication 2, l'étape de formation d'une image affecte, du fait des aléas physiques de la formation d'image, entre deux formations du même code à zones géométriques variables, la représentation du code numérique authentifiant d'une variation supérieure à une troisième valeur prédéterminée et inférieure à une quatrième valeur prédéterminée.

Par exemple, la troisième valeur prédéterminée vaut 2 % et la quatrième valeur prédéterminée vaut 45 %.

Selon la revendication 3, l'étape de formation d'une image affecte, du fait des aléas physiques de la formation d'image, la représentation du code numérique authentifiant d'un bruit de telle sorte que le rapport signal sur bruit de la représentation du code numérique authentifiant est inférieur à une cinquième valeur prédéterminée.

Selon des caractéristiques particulières, l'étape de formation d'une image affecte, du fait des aléas physiques de la formation d'image, la représentation du code numérique authentifiant d'un bruit de telle sorte que le rapport signal sur bruit de la représentation du code numérique authentifiant est supérieur à une sixième valeur prédéterminée.

Par exemple, la cinquième valeur prédéterminée du rapport signal sur bruit vaut 0,05 et la sixième valeur prédéterminée vaut 2,63, résultant en une performance de détection de copie d'au moins 25 % de la performance optimale de détection de copie (obtenue pour une valeur de 0,56).

Par exemple, la cinquième valeur prédéterminée du rapport signal sur bruit vaut 0,11 et la sixième valeur prédéterminée vaut 1,8, résultant en une performance de détection de copie d'au moins 75 % de la performance optimale de détection de copie (obtenue pour une valeur de 0,56).

Par exemple, la cinquième valeur prédéterminée du rapport signal sur bruit vaut 0,32 et la sixième valeur prédéterminée vaut 0,93, résultant en une performance de détection de copie d'au moins 90 % de la performance optimale de détection de copie (obtenue pour une valeur de 0,56).

Selon la revendication 4, le procédé objet de la présente invention, tel que succinctement exposé ci-dessus comporte, en outre :

- une étape de détermination de conditions de formation de ladite image et
- une étape de détermination de caractéristiques physiques de cellules d'au moins une partie du code numérique authentifiant, en fonction des conditions de formation d'image.

Selon la revendication 5, au cours de l'étape de génération dudit code à zones géométriques variables, les zones géométriques variables sont des barres globalement rectangulaires parallèles dont la largeur et/ou l'écartement varie en fonction dudit message.

Ainsi, la présente invention s'applique à des codes à barres à une dimension.

Selon la revendication 6, au cours de l'étape de génération dudit code à zones géométriques variables, les zones géométriques variables sont des zones carrées insérées dans une matrice dont la couleur et/ou au moins une dimension varie en fonction dudit message.

Ainsi, la présente invention s'applique à des codes à barres à deux dimensions.

Selon la revendication 7, au cours de l'étape de formation de l'image dudit code à zones géométriques comportant, dans au moins une partie de ses zones géométriques, une partie dudit code numérique authentifiant, le code numérique authentifiant prend la forme d'une variation d'au moins une dimension de zones géométriques variables.

Selon la revendication 8, au cours de l'étape de formation de l'image dudit code à zones géométriques comportant, dans au moins une partie de ses zones géométriques, une partie dudit code numérique authentifiant, chaque partie du code numérique authentifiant insérée dans une zone géométrique du code à zone géométriques variables, prend la forme d'une distribution de cellules rectangulaires d'au moins un ordre de grandeur plus petit que les dimensions de ladite zone géométrique, une partie desdites cellules présentant une couleur différente de celle de ladite zone géométrique.

Selon la revendication 9, dans chaque zone géométrique comportant une partie du code numérique authentifiant, la surface des dites cellules est inférieure à un quart de la surface de ladite zone géométrique.

Selon des caractéristiques particulières, le procédé objet de la présente invention, tel que succinctement exposé ci-dessus, comporte, en outre, une étape de codage d'une information dans ledit code numérique authentifiant.

Selon des caractéristiques particulières, ladite information est fonction dudit message et/ou ledit message est fonction de ladite information.

On renforce ainsi l'authentification puisqu'on ne peut pas modifier le message sans modifier l'information portée par le CNA et/ou réciproquement.

Selon des caractéristiques particulières, ladite information est représentative d'une mesure de dégradation du code numérique authentifiant due à des aléas physiques affectant l'image lors l'étape de formation d'une image.

Par exemple, l'information est représentative d'un taux d'erreurs dû à l'étape de formation d'une image, d'un rapport signal sur bruit dû à l'étape de formation d'une image ou d'un taux de corrélation avec un code numérique authentifiant d'origine. Cette information peut représenter un niveau de dégradation attendu ou un niveau de dégradation limite au delà duquel le code sera considéré comme une copie. L'authentification de l'image peut ainsi être réalisée de manière autonome, par un lecteur adapté à capter une image du code numérique authentifiant inséré dans le code à zones géométriques variables puisque celui-ci indique, par le biais de l'information qu'il porte, le niveau de dégradation normal et, en conséquence, à partir de quel niveau de dégradation, une image captée représente une copie du code numérique authentifiant.

Selon des caractéristiques particulières, le procédé objet de la présente invention comporte, en outre, une étape de mesure de dégradation du code numérique authentifiant généré au cours de l'étape de formation d'une image.

Selon des caractéristiques particulières, au cours de l'étape de mesure de dégradation, on met en oeuvre des codes de détection d'erreurs intégrés audit code numérique authentifiant.

Ladite mesure, ou « score » est, par exemple, le pourcentage de bits correctement déterminés, un taux de corrélation entre le CNA d'origine et le CNA capté dans une image captée par un capteur d'image.

Selon la revendication 10, le procédé objet de la présente invention, tel que succinctement exposé ci-dessus, comporte une étape de détermination d'une empreinte de l'image générée, ladite empreinte étant fonction d'une dégradation du code numérique authentifiant au cours de l'étape de formation d'une image.

L'objet ou document qui porte le code à zones géométriques variables peut ainsi être identifié, c'est-à-dire reconnu, même si le code à zones géométriques variables et le code numérique authentifiant sont identiques pour une pluralité d'objets ou documents.

Selon un deuxième aspect, la présente invention vise un dispositif d'authentification d'un code à zones géométriques de formes et/ou couleurs variables en fonction d'un message, selon la revendication 12.

Selon un troisième aspect (revendication 13), la présente invention vise un procédé d'authentification d'un code à zones géométriques de formes et/ou couleurs variables, représenté par une image captée, caractérisé en ce qu'il comporte :

- une étape de lecture d'un message porté par les formes et couleurs moyennes des zones géométriques,
- une étape de mesure d'un niveau de dégradation d'un code numérique authentifiant représenté dans au moins une partie des zones géométriques dudit code à zones géométriques et
- une étape de détermination de l'authenticité du dit code à zones géométriques en fonction d'au moins ledit niveau de dégradation.

Selon un quatrième aspect (revendication 14), la présente invention vise un dispositif d'authentification d'un code à zones géométriques de formes et/ou couleurs représenté par une image captée, caractérisé en ce qu'il comporte :

- un moyen de lecture d'un message porté par les formes et couleurs moyennes des zones géométriques,
- un moyen de mesure d'un niveau de dégradation d'un code numérique authentifiant représenté dans au moins une partie des zones géométriques dudit code à zones géométriques et
- un moyen de détermination de l'authenticité du dit code à zones géométriques adapté à déterminer l'authenticité du dit code à zones géométriques variables en fonction d'au moins ledit niveau de dégradation.

Selon un cinquième aspect (revendication 15), la présente invention vise un code à zones géométriques de formes et/ou couleurs variables en fonction d'un message, représentant:

- un message par l'intermédiaire des zones géométriques; caractérisé en ce qu'il représente:
- un code numérique authentifiant, dans au moins une partie de ses zones géométriques, par une caractéristique de marquage variable en fonction dudit code numérique authentifiant, le code numérique présentant un taux d'erreur supérieur à une première valeur prédéterminée et inférieure à une deuxième valeur prédéterminée après formation.

Les avantages, buts et caractéristiques particulières de ces dispositifs, de ce procédé et de ce code objets de la présente invention étant similaires à ceux du procédé d'authentification objet du premier aspect de la présente invention, tel que succinctement exposé ci-dessus, ils ne sont pas rappelés ici.

D'autres avantages, buts et caractéristiques particulières de la présente invention ressortiront de la description qui va suivre faite, dans un but explicatif et nullement limitatif, en regard des dessins annexés, dans lesquels :

- la figure 1A représente un Data Matrix connu dans l'art antérieur,
- la figure 1B représente un agrandissement du Data Matrix illustré en figure 1A,
- les figures 2A et 3A représentent des modes de réalisation particuliers des codes objets de la présente invention, des agrandissements de parties de ces codes étant donnés en figures 2B et 3B, respectivement,
- les figures 4 à 7 représentent, sous forme de logigrammes, des étapes mises en oeuvre dans des modes de réalisation particuliers des procédés objets de la présente invention,
- la figure 8 représente, schématiquement, un mode de réalisation particulier du dispositif objet de la présente invention,
- la figure 9A représente un mode de réalisation particulier d'un code objet de la présente invention, un agrandissement d'une partie de ce code étant donné en figure 9B et
- la figure 10 représente la performance de détection de copie normalisée par rapport à la valeur optimale, en fonction du rapport signal sur bruit.

Dans toute la description, on utile indifféremment les termes de « formation d'une image » ou « d'impression » pour désigner la formation d'une marque détectable, par exemple par dépôt d'encre, ablation de matière, transfert de poudre solide ou une modification physique ou chimique locale, par exemple sous l'effet de la chaleur.

Bien que la description qui suit soit faite pour le cas de codes à barres en deux dimensions, la présente invention ne se limite pas à ce type de marquage et impression sur des objets mais s'étend, bien au contraire, à tous les types de marquages et d'impression de codes à zones géométriques de formes et/ou couleurs variables en fonction d'un message, notamment les codes à barres en une, deux ou trois dimension(s) formés en surface des objets et les marquages sous la surface des objets.

Dans le cas des codes à barres à une dimension, les zones géométriques du code sont des barres verticales rectangulaires alternativement blanches et noires dont les largeurs varient en fonction du message portée par le code.

Dans le cas des codes à barres à deux dimensions, les zones géométriques du code sont des carrés formant une grille régulière, dont la couleur varie en fonction du message portée par le code.

Dans la suite de la description, on appelle « cellules » ces zones géométriques.

On décrit, ci-dessous, en particulier, des méthodes et dispositifs pour authentifier directement des codes barre 2D (aussi appelés Data Matrix) et, notamment, pour authentifier des codes à barres 2D imprimés par intégration d'un code numérique authentifiant (« CNA »), marqués par laser à intensité modulable, et par laser à intensité fixe.

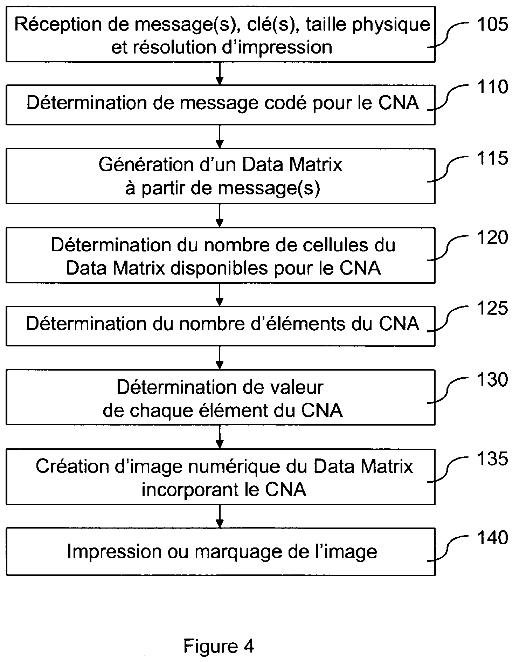

En ce qui concerne l'intégration d'un CNA dans un code barre 2D, une méthode pour générer un Data Matrix comportant un CNA intégré est décrite ci-dessous en regard de la figure 4. On note que les paramètres de génération recommandés du CNA, notamment la résolution en pixels par pouces et le type de cellule utilisé (c'est-à-dire la forme et/ou la taille des éléments composant le CNA, ont été déterminés auparavant pour le procédé d'impression (papier, encre, machine d'impression, document), par exemple en utilisant une méthode connue.

En ce qui concerne la méthode de détermination des paramètres optimaux de formation d'image des motifs identifiants, il existe un taux de dégradation optimal permettant de séparer le plus aisément possible les différentes impressions d'un même motif identifiant source. Ainsi, si le taux de dégradation à l'impression est très faible, par exemple 1 % ou 2 % (1 ou 2 % des cellules ou pixels du motif identifiant sont mal lues à partir d'une capture parfaite), les différentes impressions d'un même motif identifiant sont très proches l'une de l'autre, et il est difficile de les identifier de manière fiable, à moins d'avoir une capture très précise de l'image et/ou un algorithme d'analyse très précis. Similairement, lorsque le taux de dégradation est très élevé, par exemple 45 à 50 % (45 ou 50 % des cellules de la matrice d'information sécurisée sont mal lues à partir d'une capture parfaite, 50 % signifiant qu'il n'y a aucune corrélation statistique entre la matrice lue et la matrice d'origine), les motifs identifiants imprimées sont quasi indistinctes les unes des autres. En réalité, le taux de dégradation optimal est proche de 25 %, et si les conditions de l'application le permettent, il est préférable de s'en approcher. En effet, pour 25 % de dégradation, en supposant que les variations d'impression et donc les dégradations soient de nature probabiliste, on maximise, en chacun des points du motif identifiant imprimé, les chances qu'il diffère des autres motifs identifiants imprimés.

On donne, ci-dessous, un deuxième analyse des taux d'erreur à rechercher au moment de la formation d'une image à imprimer en fonction des moyens d'impression à mettre en oeuvre.

On rappelle ici que les codes numériques authentifiants (« CNA ») sont composés de différents éléments prenant des valeurs discrètes. Dans le cas de valeurs binaires, les éléments peuvent être représentés par une cellule d'une couleur noire (imprimée) ou blanche (non-imprimée). Lors de la détection, on détermine un taux d'erreur qui correspond au taux de cellules contenant une valeur incorrecte. On note que le taux d'erreur est directement lié au rapport de l'énergie du signal sur l'énergie du bruit.

Afin de déterminer comment on peut générer des MPCV permettant d'optimiser la détection de copie, nous présentons ci-dessous un modèle basé sur la théorie de la décision. Les caractéristiques mesurées sur les images (ou points) sont représentées par des signaux. Pour simplifier l'analyse, on y fait l'hypothèse que les signaux numériques, avant impression, ont des valeurs binaires, correspondant à des caractéristiques pouvant avoir des valeurs binaires (par exemple deux tailles de points, deux positions,etc.). Cette hypothèse se justifie par le fait que la plupart des procédés d'impression traitent des images binaires. Evidemment, les conclusions de l'analyse peuvent être étendues à des cas plus complexes, notamment avec plusieurs valeurs possibles de caractéristiques de point. L'impression du MPCV est modélisée par l'ajout de bruit gaussien. Il est également supposé que les copies sont réalisées avec le même procédé d'impression, de sorte que l'impression de la copie est modélisée également par l'ajout de bruit gaussien de même énergie. De plus, le contrefacteur, qui capte le signal avant d'en imprimer une copie est forcé de reconstruire un signal binaire en faisant un estimé de la valeur initiale qui minimise sa probablité d'erreur.

Ce modèle correspond directement à des MPCV pouvant avoir des tailles de point de 1x1 pixel ou 1x2 pixels (imprimé, par exemple, à 2 400 dpi), pour lequel le contrefacteur doit nécessairement choisir une des tailles de point dans l'image reconstruite à partir d'un scan, en fonction d'un niveau de gris mesuré ou d'une surface estimée du point. Le modèle correspond également à des MPCV avec des positions variant de 1 pixel, par exemple.

A partir de ce modèle, nous dérivons le détecteur optimal, la distribution statistique des valeurs du détecteur, et les valeurs de paramètre qui maximisent la détection de copie.

Le tableau suivant résume les différentes variables.

| s | Signal source |
|---|---|
| $n, n_c$ | Bruit, bruit copie |
| x | Signal reçu |

Sans perte de généralité, le signal source est équiprobable, c'est-à-dire $s[i]$: $\{+a,-a\}$, pour $i=0,1,...,N$-1, et $a>0$. Le bruit d'impression est distribué selon une loi gaussienne $N(0,\sigma^2)$. Les hypothèses du modèle se résument ainsi:

$$(H0)x[i] : \{+a,-a\} \tag{1}$$

$$(H1)n[i] : N(0,\sigma^2) \tag{2}$$

$$(H2)n_c[i] : N(0,\sigma^2) \tag{3}$$

On peut facilement vérifier que le contrefacteur minimise sa probabilité d'erreur en restaurant le signal à la valeur la plus proche entre $+a,-a$.

Par conséquent, le problème de détection consiste à distinguer les deux hypothèses suivantes :

$$H_0 : x[i] = s[i] + n[i] \tag{4}$$

$$H_1 : x[i] = a.sign(s[i] + n[i]) + n_c[i] \tag{5}$$

où $H_0$ et $H_1$ sont les hypothèses que le signal reçu est un original, respectivement, une copie.

La probabilité que le contrefacteur a correctement estimé la valeur est :

$$p(sign(s[i] + n[i]) = s[i]) = p(s[i] + n[i] > 0) \tag{6}$$

$$= p(N(a,\sigma^2) > 0) \tag{7}$$

$$= p(N(0,1) > -a/\sigma) \tag{8}$$

$$= Q(-a/\sigma) \tag{9}$$

où

$$Q(x) = (2\pi)^{-1/2} \int_{-a/\sigma}^{+\infty} \exp^{-x^2/2} dx.$$

Nous avons les distributions de probabilité suivantes pour le signal reçu, où dans l'hypothèse $H_1$ nous avons une mixture de deux distributions Gaussiennes.

$$p(x;H_0) = \frac{1}{(2\pi\sigma^2)^{N/2}} \exp[-\frac{1}{2\sigma^2}\sum_{n=0}^{N-1}(x[n]-s[n])^2] \qquad (10)$$

$$p(x;H_1) = (1-Q(-a/\sigma))\frac{1}{(2\pi\sigma^2)^{N/2}} \exp[-\frac{1}{2\sigma^2}\sum_{n=0}^{N-1}(x[n]+s[n])^2] + \quad (11)$$

$$Q(-a/\sigma)\frac{1}{(2\pi\sigma^2)^{N/2}} \exp[-\frac{1}{2\sigma^2}\sum_{n=0}^{N-1}(x[n]-s[n])^2] \qquad (12)$$

Nous allons vérifier qu'un simple corrélateur donne une fonction de classification optimale. Un test de Neyman-Pearson detector decide $H_1$ si le rapport de vraisemblance excède un seuil $t$ :

$$L(\mathbf{x}) = \frac{p(\mathbf{x};H_1)}{p(\mathbf{x};H_0)} > t \qquad (13)$$

Le rapport de vraisemblance est donné par:

$$L(\mathbf{x}) = Q(-a/\sigma) + (1-Q(-a/\sigma))\exp[-\frac{1}{2\sigma^2}(\sum_{n=0}^{N-1}(x[n]+s[n])^2 + \frac{1}{2\sigma^2}\sum_{n=0}^{N-1}(x[n]-s[n])^2]$$
$$(14)$$

Prenant le logarithme, et un nouveau seuil t', on obtient :

$$T'(x,s) = \sum_{n=0}^{N-1} x[n]s[n] < t' \qquad (15)$$

La fonction de classification est donc un simple corrélateur T', dont la valeur doit être inférieure à un seuil t' pour classifier le signal comme copie.
Déterminons les statistiques de T' pour les deux hypothèses. Nous pouvons supposer que T' suit une gaussienne (vrai pour N élevé)dont nous nous dérivons les moyennes et variances pour les deux hypothèses :

$$E[T';H_0] = Na^2 \qquad (16)$$

$$E[T';H_1] = Q(-a/\sigma)Na^2 - (1-Q(-a/\sigma))Na^2 = (2Q(-a/\sigma)-1)Na^2 \quad (17)$$

$$Var[T';H_0] = Na^2\sigma^2 \qquad (18)$$

$$Var[T';H_1] = N(a^2\sigma^2 + a^4 Q(-a/\sigma)(1-Q(-a/\sigma))) \qquad (19)$$

Le deuxième terme de la variance pour l'hypothèse $H_1$, ($a^4Q(-a/\sigma)(1-Q(-a/\sigma))$), peut être éliminé si les copies viennent du même original. En pratique, le contrefacteur minimise son travail en n'utilisant qu'un original pour produire un grand nombre copies, il est raisonable d'éliminer le terme.

Dans le cas où les variances sont égales, on peut caractériser la performance de détection par le coefficient de déflection $d^2$, qui correspond à la différence entre les moyenne de la fonction T' pour les deux hypothèses, normalisée par la variance de T' :

$$d^2 = \frac{(E[T';H_0] - E[T';H_1])^2}{Var[T';H_0]} \tag{22}$$

$$= \frac{2N^2a^4(1-Q(-a/\sigma))^2}{Na^2\sigma^2} \tag{23}$$

$$= \frac{2Na^2(1-Q(-a/\sigma))^2}{\sigma^2} \tag{24}$$

$$= 2N\gamma(1-Q(-\sqrt{\gamma}))^2 \tag{25}$$

où $\gamma = a^2/\sigma^2$ est la racine carrée du rapport signal sur bruit.

La performance de détection croissant avec le coefficient de déflection, l'objectif est de déterminer la valeur de $\gamma$ maximisant l'expression $(\gamma(1-Q(\gamma)))^2$.

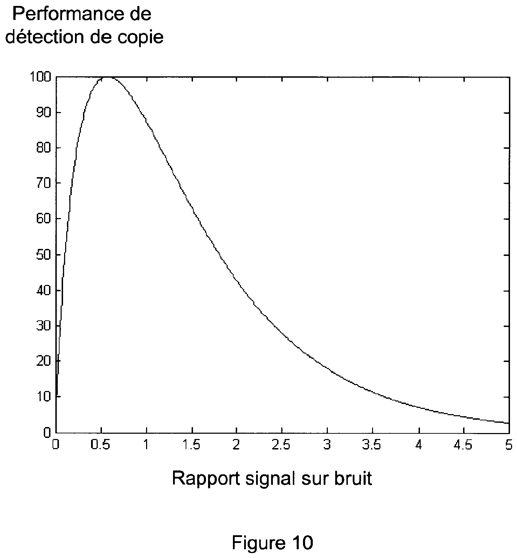

La Figure 10 représente la valeur de l'expression de l'équation (25) pour une valeur de N fixée, normalisée sur sa valeur optimale et obtenue en fonction de $\gamma$. On peut l'interpréter comme suit. Les valeurs de $\gamma$ proche de zéro correspondent à un bruit très élevé par rapport au signal : lorsque le bruit est très élevé, le signal est trop dégradé dès la première impression, le contrefacteur introduit un nombre d'erreurs d'estimation trop faible. A l'inverse, pour des valeurs de $\gamma$ trop élevées, le signal n'est pas suffisamment dégradé, et dans une trop grande proportion des cas le contrefacteur n'introduira pas d'erreur d'estimation. Entre les deux extrêmes, l'expression passe par une valeur optimale, dont on estime numériquement la valeur à $\gamma \approx 0.752$.

Il est intéressant de noter que pour cette valeur, la probabilité que le contrefacteur n'ait pas déterminé correctement la valeur, est d'environ 22,6 %.

En pratique, il s'agit, lors de l'impression, d'obtenir un rapport signal sur bruit $\gamma^2$ aussi proche que possible de $0,752^2$, soit $0,565$.

Prenons un exemple pour mieux comprendre comment viser cette valeur de rapport. Supposons que nous générons un MPCV avec deux tailles de point (exprimées en nombre de pixels) possibles, la taille de point étant de l'ordre de neuf pixels (par exemple, 3x3 pixels). On note que la taille de point peut être mesurée en mettant en oeuvre une multitude d'algorithmes, par exemple par seuillage adaptatif local du niveau de gris et dénombrement des pixels en dessous du seuil. On imprime un nombre suffisant de fois des points de neuf pixels. On mesure, dans une image capturée, la moyenne et l'écart-type du nombre de pixels de chaque point. Supposons qu'on obtient une moyenne de douze (on observe un gain physique moyen de 33 %), et un écart-type de quatre. Cet écart-type correspond à la valeur $\sigma$ décrivant le bruit dans les formules de notre modèle. On visera alors une valeur de notre signal $a$ de l'ordre de trois, pour obtenir un rapport $\gamma = 0.75$, soit très près de l'optimum. Pour obtenir cette valeur de signal, on peut par exemple définir deux tailles de points de quinze et de six pixels.

Préférentiellement, l'étape de formation d'une image affecte, du fait des aléas physiques de la formation d'image, la représentation du code numérique authentifiant d'un taux d'erreur supérieur à une première valeur prédéterminée et inférieure à une deuxième valeur prédéterminée. Par exemple, la première valeur prédéterminée vaut 10 % et la deuxième valeur prédéterminée vaut 35 %.

Préférentiellement, l'étape de formation d'une image affecte, du fait des aléas physiques de la formation d'image, entre deux formations du même code à zones géométriques variables, la représentation du code numérique authentifiant d'une variation supérieure à une troisième valeur prédéterminée et inférieure à une quatrième valeur prédéterminée. Par exemple, la troisième valeur prédéterminée vaut 2 % et la quatrième valeur prédéterminée vaut 45 %.

Préférentiellement, l'étape de formation d'une image affecte, du fait des aléas physiques de la formation d'image, la représentation du code numérique authentifiant d'un bruit de telle sorte que le rapport signal sur bruit de la représentation du code numérique authentifiant est inférieur à une cinquième valeur prédéterminée et, préférentiellement, supérieur à une sixième valeur prédéterminée.

Selon un premier exemple, la cinquième valeur prédéterminée du rapport signal sur bruit vaut 0,05 et la sixième valeur prédéterminée vaut 2,63, résultant en une performance de détection de copie d'au moins 25 % de la performance optimale de détection de copie (obtenue pour une valeur de 0,56).

Plus préférentiellement, la cinquième valeur prédéterminée du rapport signal sur bruit vaut 0,11 et la sixième valeur prédéterminée vaut 1,8, résultant en une performance de détection de copie d'au moins 75 % de la performance optimale de détection de copie (obtenue pour une valeur de 0,56).

Encore plus préférentiellement, la cinquième valeur prédéterminée du rapport signal sur bruit vaut 0,32 et la sixième valeur prédéterminée vaut 0,93, résultant en une performance de détection de copie d'au moins 90 % de la performance optimale de détection de copie (obtenue pour une valeur de 0,56).

On décrit, ci-dessous, un algorithme possible d'optimisation des paramètres d'impression :

- au cours d'une étape 720, on reçoit la surface disponible pour le motif identifiant, par exemple un carré dont le côté mesure 1/6 de pouce,
- au cours d'une étape 721, on génère plusieurs images numériques de motifs identifiants de dimensions numériques différentes, correspondant aux différentes résolutions d'impression possibles, par exemple un motif identifiant de 66 x 66 pixels à 400 points par pouce, un de 100 x 100 pixels à 600 points par pouce, un de 133 x 133 pixels à 800 points par pouce , un de 200 x 200 pixels à 1200 points par pouce,
- au cours d'une étape 722, on imprime plusieurs fois chacun des motifs identifiants de dimensions numériques différentes, par exemple 100 fois, avec la résolution adéquate de façon à ce que les dimensions de l'impression correspondent à la surface disponible.
- au cours d'une étape 723, pour chaque type, on capture plusieurs fois chacun des motifs identifiants imprimés, par exemple 3 fois,
- au cours d'une étape 724, on calcule l'empreinte de chaque motif identifiant, ladite empreinte étant fonction d'une dégradation du code numérique authentifiant au cours de l'étape de formation d'une image, ladite empreinte étant généralement unique pour chaque image formée du fait de l'aspect aléatoire de chaque erreur individuel,
- au cours d'une étape 725, on calcule les scores de similarité pour toutes les paires de motif identifiant capturés de même résolution d'impression et
- au cours d'une étape 726, on suit la méthode décrite dans l'expérimentation de la méthode extraction d'empreinte générique exposée plus haut pour mesurer le « degré de séparation des empreintes », pour chacune des résolutions d'impression, et choisir la résolution d'impression donnant la valeur maximale de ce degré.

En variante, on imprime plusieurs matrices d'information sécurisées à différentes résolutions d'impression, et on détermine la résolution d'impression résultant en un taux d'erreur de 25 %, tel que calculé avec un des algorithmes décrits par ailleurs.

En variante, on choisit la résolution d'impression dont la différence est la plus élevée entre la plus basse valeur de score calculée sur la comparaison entre les empreintes correspondant à des impressions identiques, et la plus haute valeur de score calculée sur la comparaison entre les empreintes correspondant à des impressions différentes.

Comme illustré en figure 4, au cours d'une étape 105, on reçoit un ou plusieurs messages, une ou plusieurs clés, une taille physique de Data Matrix et une résolution d'impression.

Au cours d'une étape optionnelle 110, on détermine, à partir des clés et messages, le ou les messages codés qui seront insérés dans le CNA. En particulier, les messages du CNA peuvent être corrélés avec le message représenté par le Data Matrix, l'un étant (en partie) fonction de l'autre, afin de renforcer l'authentification.

Au cours d'une étape 115, on génère un Data Matrix à partir d'au moins un des messages reçus au cours de l'étape 105.

Au cours d'une étape 120, on détermine le nombre de cellules noires du Data Matrix, les motifs de repérage (connus sous le nom de « finder pattern ») pouvant ou non être inclus dans le Data Matrix.

Au cours d'une étape 125, en fonction du nombre de cellules noires, de la résolution d'impression et de la taille physique, on détermine le nombre d'éléments du CNA.

Au cours d'une étape 130, en fonction du nombre d'éléments, des clés et des messages, on détermine, en utilisant un algorithme de génération de CNA, les valeurs prises par chacun des éléments du CNA. On note ici que les algorithmes de génération de CNA comportent souvent des étapes de cryptage, d'encodage, de répétition, et de brouillage (« scrambling ») (par exemple avec permutation et/ou substitution).

Au cours d'une étape 135, on crée l'image numérique du Data Matrix, en inscrivant les valeurs du CNA selon un ordre prédéterminé (par exemple de gauche à droite puis de haut en bas) dans les pixels correspondant au nombre de cellules noires.

Au cours d'une étape 140, on imprime ou on marque un objet pour y former l'image numérique du Data Matrix incorporant le CNA.

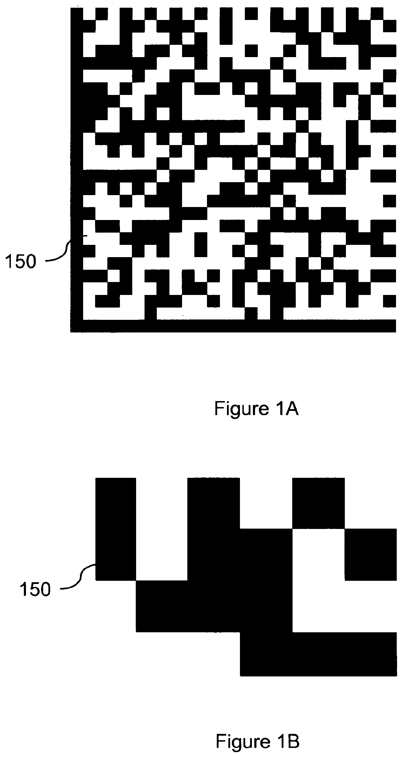

On donne, ci-dessous, un exemple dans lequel on a généré le Data Matrix 150 illustré en figure 1 selon un algorithme standard, à partir d'un message. Le Data Matrix 150 fait la taille de 26x26 cellules en incluant les motifs de repérage, et compte 344 cellules noires, toujours en incluant les motifs de repérage.

Nous souhaitons l'imprimer avec un moyen d'impression permettant une résolution 600 pixels par pouce (« ppi »), et qu'il occupe une surface de 1 cm x 1 cm approximativement. La taille en pixels de l'image équivalente à 1 cm est de 236 x 236 pixels, soit 236 pixels pour 26 cellules et 9.07 pixels/cellule (dans chaque dimension). En arrondissant à neuf pixels par cellule dans chaque dimension, on obtient une taille du Data Matrix en pixels de 234 x 234 (car 26 x 9 = 234), et on dispose de 9 x 9 = 81 pixels par cellule.

Comme nous avons 344 cellules noires, un CNA généré sur l'ensemble des cellules noires peut compter 81 x 344 = 27.864 pixels. On peut donc générer un CNA qui compte un bit par pixel, donc le CNA comptera 27.864 bits. On génère le CNA à partir des clés et messages selon un des algorithmes connus, et on insère les valeurs du CNA dans les cellules noires.

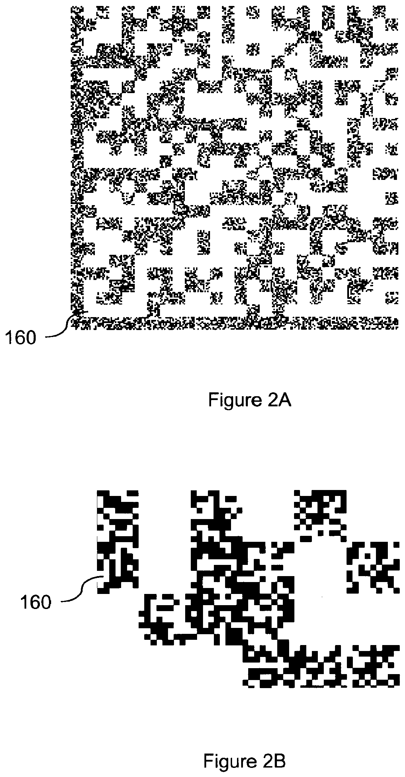

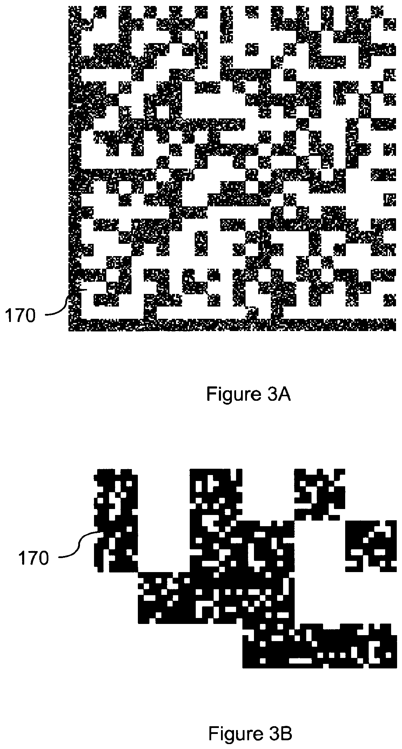

La figure 2 montre un Data Matrix 160 objet de la présente invention généré à partir du Data Matrix 150, dans lequel un CNA est réparti sur l'ensemble des cellules noires. Selon le moyen d'impression, l'encre ou le papier ou autre support, il se peut que le Data Matrix n'ait pas la qualité requise pour le décodage, par exemple parce qu'il comporte des « trous » au niveau des cellules. Pour remédier à cela, en variante, on sélectionne un sous-ensemble des pixels parmi les cellules noires pour porter les valeurs du CNA. Par exemple, on prend un pixel sur deux, les pixels non-sélectionnés restant noirs, pour avoir un taux moyen de 75 % de pixels noirs par cellule. On a ainsi un CNA de 27.864 / 2 = 13.932 bits. La figure 3 montre un tel Data Matrix 170. On peut également sélectionner un sous-ensemble des pixels des cellules noires à partir d'une clé cryptographique.

Il est préférentiel que la lisibilité du Data Matrix ne soit pas significativement affectée par les modifications effectuées. A titre d'exemple, les inventeurs ont imprimé avec une imprimante laser de bureautique les Data Matrix 150, 160 et 170 à la résolution de 600 ppi (taille de 1 cm.), et utilisé le dispositif de vérification de code-barre « TruCheck USB vérifier » (marque déposée), qui permet de déterminer le grade du Data Matrix. Le Data Matrix 150, qui sert de référence, obtient un grade de 'A', alors que les Data Matrix 160 et 170 obtiennent respectivement 'B' et 'A'. Notant que le Data Matrix 160 contient davantage d'information pouvant servir à l'authentification (et/ou à transporter un message) que le Data Matrix 170, on voit qu'il peut exister une relation inverse entre la qualité du Data Matrix, et la quantité d'information contenue au niveau du CNA. L'espace disponible pour la modulation du CNA dépend, en pratique, du grade acceptable pour l'application. Dans notre cas, si un grade de 'B' est acceptable (en principe les grades au dessus de 'C' sont acceptables), on prend préférentiellement le Data Matrix 160 comportant davantage d'information. Si seul le grade 'A' est acceptable, on prend le Data Matrix 170. Autrement, on ajuste le taux d'exploitation de la cellule utilisée pour viser le grade minimum requis.

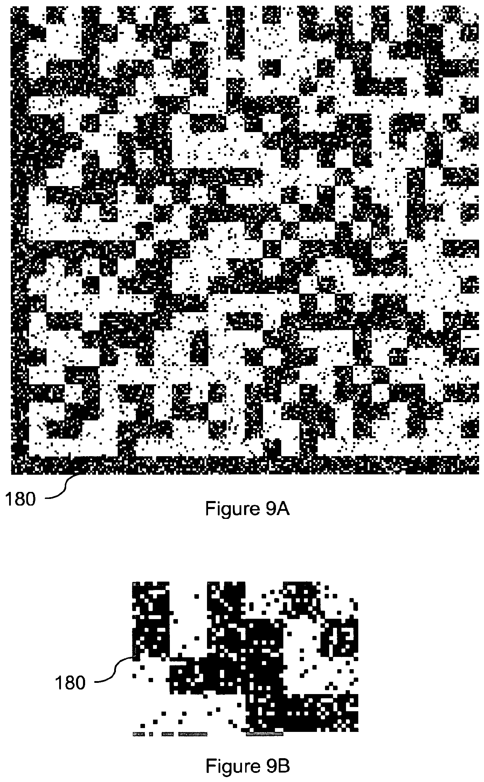

Pour augmenter le nombre d'éléments du CNA, on peut égaler exploiter les zones blanches (ou non-marquées). Il s'agit alors de conserver une faible densité de couleur pour la zone blanche, de sorte que le décodage ne soit pas perturbé. Par exemple, on peut exploiter 20 % des pixels des zones blanches, en excluant préférentiellement la bordure de la zone qui peut être en contact avec une zone noire. On note que, si le CNA possède des valeurs binaires équiprobables, on a 10 % des pixels en moyennes qui sont noirs, ce qui perturbe faiblement le taux de coloration de la cellule. Dans notre exemple précédent, on utiliserait les 7x7 pixels internes de la zone blanche, et on en choisirait 10, de façon pseudo-aléatoire, ces dix pixels contenant un élément de CNA. Les éléments peuvent être placés uniquement sur les colonnes et lignes paires, par exemple, pour éviter qu'ils ne se touchent. On peut intégrer ces éléments au CNA des cellules noires, ou le considérer comme un autre CNA, ce qui offre un autre moyen d'authentification. Les figures 9A et 9B donnent un tel exemple 180 de Data Matrix pour lequel les cellules blanches contiennent également des éléments authentifiants.

On note que les éléments de ce CNA peuvent aussi avoir une taille variable, par exemple des éléments de 1x2 pixels et de 1x1 pixels, pour rendre plus difficile l'identification des éléments par un contrefacteur qui chercherait à reconstruire parfaitement le CNA d'origine.

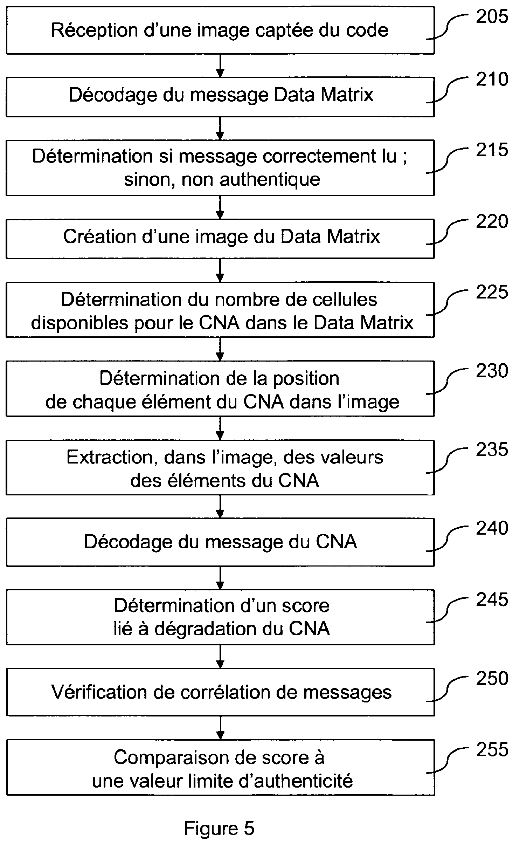

On donne, ci-dessous, en regard de la figure 5, un exemple d'algorithme pour authentifier un Data Matrix imprimé muni d'un CNA.

Au cours d'une étape 205, on reçoit une image provenant d'une capture d'image, par exemple avec un scanner, cette image contenant le Data Matrix et donc le CNA. On reçoit, parallèlement, des clés de déchiffrement, et les paramètres de lecture du CNA (par exemple, la taille en pixel de chaque cellule), ainsi qu'un seuil de décision.

Au cours d'une étape 210, on décode le message du Data Matrix porté par les formes et couleurs moyennes des cellules carrées.

Au cours d'une étape 215, on détermine si le message du Data Matrix est correctement lu, par exemple en fonction des ECC intégrés. Sinon, on considère que le Data Matrix n'est pas authentique et on affiche à l'utilisateur : « Code non authentique » Si le message est correctement lu, au cours d'une étape 220, on crée une image du Data Matrix d'origine.

Puis, au cours d'une étape 225, on détermine le nombre de cellules noires, et en fonction des paramètres de lecture du CNA, on détermine le nombre d'éléments du CNA.

Au cours d'une étape 230, en fonction de l'image du Data Matrix d'origine et du nombre d'éléments du CNA, on détermine la position (en termes de pixels) dans l'image, de chacun des éléments du CNA. Au cours d'une étape 235, on extrait de l'image, une valeur associée à la valeur de chaque élément du CNA, par exemple le niveau de gris du pixel. On obtient ainsi un vecteur de données représentatif du CNA imprimé, et des dégradations que ce dernier a subi

Au cours d'une étape 240, en utilisant les clés de débrouillage (au cas où le CNA aurait été brouillé), on décode le ou les messages du CNA.

Au cours d'une étape 245, on détermine son score représentatif du taux de dégradation du CNA. Le score est, par exemple, le pourcentage de bits correctement déterminés, un taux de corrélation entre le CNA d'origine et le CNA mesuré à partir de l'image captée, etc.

En option, si, au cours de leurs créations, les messages du CNA et du Data Matrix sont corrélés, on vérifie cette corrélation au cours d'une étape 250 et on affiche à l'utilisateur « Data Matrix non authentifié » s'ils ne le sont pas.

Enfin, au cours d'une étape 255, on compare le score mesuré à une valeur limite prédéterminée ou « seuil de décision ». S'il est supérieur, par exemple du fait d'un taux d'erreur faible ou d'un taux de corrélation élevé, on affiche à l'utilisateur « Data Matrix authentifié ». Sinon, on affiche « Data Matrix non authentifié ». En option, on affiche chaque message lu.

En variantes, on réserve des bits du CNA pour la synchronisation, de manière connue en soi.

On note que le même Data Matrix peut être imprimé ou marqué plusieurs fois en impression statique (offset, flexographie, etc.), ou varier à chaque impression en impression numérique.

Dans un deuxième mode de réalisation, on met en oeuvre un système de marquage laser et micro percussion pour l'intégration d'un CNA. Certains systèmes de marquage, notamment de laser ou de micro percussion, d'un Data Matrix, ne peuvent pas utiliser des images de grande taille comme vu précédemment. Par exemple, marquer une image de taille 236x236 pixels comme dans l'exemple précédent prendrait un temps beaucoup trop important, ce qui ralentirait beaucoup trop la cadence de la ligne de production, ou générerait des Data Matrix de grande taille. Le mode de réalisation particulier décrit ci-dessous vise à éviter ces inconvénients.

On note que plusieurs méthodes de réalisation d'un Data Matrix sont possibles en mettant en oeuvre un laser :

- un impact laser peut créer chaque cellule,
- plusieurs impacts laser juxtaposés peuvent créer chaque cellule, ou
- une cellule ou des amas des cellules peuvent être vectorisées et gravées par un tir laser en continu.

De plus, on note que, sur plusieurs systèmes de marquage laser, il est possible de faire varier localement les caractéristiques de différentiation suivantes :

- l'intensité du laser,
- la polarisation du laser,
- la focalisation du laser sur la surface à marquer,
- le micro-positionnement,
- la direction, ou l'ordre dans lequel des points sont marqués par le laser et
- la forme du front d'onde.

De même, plusieurs méthodes de réalisation d'un Data Matrix sont possibles en micro percussion :

- un impact de micro pointe peut créer chaque cellule individuelle ou
- plusieurs impacts de micro pointe juxtaposés peuvent créer chaque cellule.

De même, on peut utiliser la capacité de plusieurs systèmes de marquage par micro pointe à faire varier localement les caractéristiques de différentiation suivantes :

- la force de l'impact,
- le micro-positionnement,
- l'orientation de la micro pointe et/ou
- la forme de la micro pointe.

Afin d'optimiser le temps d'exécution d'un Data Matrix composé des cellules différenciées (selon les paramètres contrôlables du laser ou du dispositif à micro pointe), on divise les cellules en sous-ensembles, ou « classes ». Chaque sous-ensemble de cellules dont les caractéristiques de différentiation sont identiques est réalisé préférentiellement durant un seul passage de l'outil. Ceci permet de modifier le paramètre qui différencie l'effet de marquage une seule fois pour chaque sous-ensemble des cellules, au lieu de le faire pour chaque cellule individuellement. Chaque paramètre qui peut être modifié localement, et dont la variation a un impact mesurable sur le Data Matrix généré, peut être utilisé pour stocker de l'information. Par exemple, si l'intensité du laser admet deux niveaux, on peut stocker un bit d'information en modulant l'intensité ou un autre paramètre de modulation du marquage. On peut aussi, en variante, cumuler des variations sur différents paramètres localement variables.

En variante, un paramètre peut varier localement de manière quasi-continue, et on peut alors déterminer un nombre arbitraire de niveaux pour stocker de l'information. Par exemple, on met en oeuvre dix niveaux pour ledit paramètre (couleur ou variations de dimension, par exemple) au lieu des deux décrites ci-dessus, voire on fait varier la valeur de ce paramètre de manière continue.

Cependant, dans des exemples de mise en oeuvre, il est avantageux de n'utiliser que deux niveaux de valeurs pour le signal source. Dans ce cas, on peut utiliser un rapport optimal du ratio signal sur bruit, de 0,56, pour maximiser la détection de copie. Pour viser ce ratio, on détermine les propriétés de bruit du canal, typiquement le couple matériau-moyen d'impression, en qualifiant la distribution de la valeur mesurée du signal sur la capture d'image. Dans le cas de deux niveaux d'énergie, on examinera la distribution statistique des tailles d'impact, pour déterminer deux niveaux d'énergie suffisamment proches pour qu'il y ait une superposition partielle des distributions, en visant le rapport idéal de signal sur bruit mentionné ci-dessus. Concrètement, si pour une énergie de laser donnant des tailles d'impact de 0,10 mm$^2$, on a un écart-type de 0,01 mm$^2$, on prendra des niveaux d'énergie donnant des tailles d'impact moyennes proches de 0,1075 mm$^2$ et 0,0925 mm$^2$. En effet, on obtient alors un rapport signal sur bruit de 0,0075$^2$ / 0,01$^2$ = 0,5625, tout près de l'optimum théorique.

Ainsi, dans le cas d'un Data Matrix de taille 26 x 26 cellules, on a 344 tirs de laser. On génère un CNA de la même manière que vu précédemment, et on module le CNA par des points de taille 0,1075 mm$^2$ et 0,0925 mm$^2$.

Comme vu précédemment, on vérifie si les variations introduites ne provoquent une dégradation du Data Matrix incompatible avec les conditions de l'application, par exemple un grade minimum de 'C' du Data Matrix.

Dans certains cas, il n'est pas possible de moduler une information supplémentaire. Par exemple, le moyen d'impression ou de marquage ne permet que de marquer ou non une cellule (marquage unitaire binaire). Il y a également des cas où l'information supplémentaire qui est marquée n'offre pas une sécurité élevée contre la copie. Par exemple, un moyen de marquage permettant des niveaux prédéfinis de marquage qui restent distincts des autres et clairement identifiables dans l'image marquée permet d'insérer une information supplémentaire, mais celle-ci reste en principe copiable à l'identique.

Dans ces cas, on peut utiliser le bruit résiduel d'impression ou de marquage, et l'exploiter en tant que CNA. En effet, quel que soit le type d'impression, à une certaine échelle ou résolution, certains « défauts » apparaissent. Par exemple, si un impact laser laisse, en principe, un point d'impact de forme circulaire ou ellipsoïdale, on observe généralement, à une résolution suffisamment élevée, que le point d'impact n'a pas une forme parfaitement régulière. Il en va de même si un système d'impression à jet d'encre est utilisé. A une résolution encore plus élevée, on observe des irrégularités dans la profondeur du point d'impact, et ainsi de suite.

Les irrégularités du marquage peuvent être captées, mesurées, et servir à constituer un CNA. On peut alors stocker le CNA dans une base de données, ou le stocker lui-même sous forme de code-barre 2D. Cette dernière approche est cependant peu avantageuse, car marquer un second code est coûteux et consomme de l'espace sur le document, ce qui est ce que l'on cherche à éviter en général. Par contre, on peut stocker le CNA en l'associant au message du Data Matrix qui, s'il est unique (ce qui est préférentiellement le cas), permet, lors de l'étape d'authentification, de faire une simple « vérification » par comparaison de la mesure des défauts de marquage avec le CNA. De nombreuses mesures des défauts sont possibles, par exemple on peut mesurer la couleur ou le niveau de gris moyen de chaque cellule du Data Matrix, on peut déterminer le contour d'une cellule, mesurer la distance entre le centre de gravité et le contour extérieur pour différents angles, etc. Les points d'impacts peuvent se superposer, auquel cas on peut fixer une valeur limite de distance au contour extérieur.

On peut modéliser, pour le canal d'impression concerné, le résultat « moyen » du marquage d'un certain code barre 2D, sur la base de la taille moyenne des points d'impact, et, éventuellement, en tenant compte des interactions possibles lorsque des points d'impact sont adjacents. On peut soustraire l'image estimée par la modélisation de l'image captée, et le résultat comporte moins de redondance, ce qui augmente le rapport signal sur bruit et, par la même, la performance de détection.

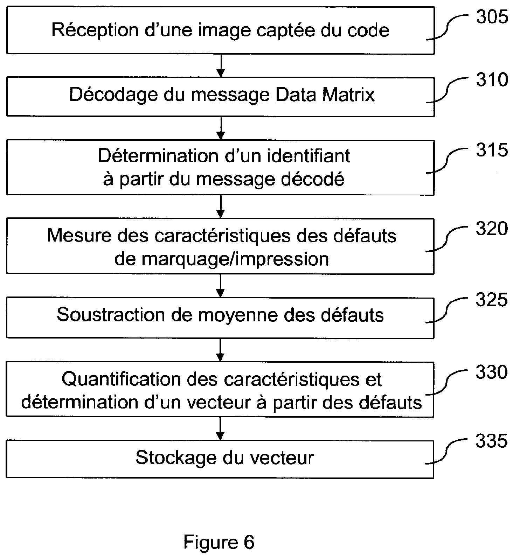

On donne, ci-dessous, en regard de la figure 6, un exemple d'algorithme permettant l'enregistrement des défauts de marquage d'un code barre :
Au cours d'une étape 305, on reçoit une image captée contenant un code barre.

Au cours d'une étape 310, on décode le message du code-barre porté par les formes et couleurs moyennes des cellules carrées.

Au cours d'une étape 315, on calcule un identifiant à partir du message.

Au cours d'une étape 320, on mesure les caractéristiques des défauts de marquage du code-barre.

Au cours d'une étape optionnelle 325, on soustrait la moyenne des caractéristiques pour un ensemble de Data Matrix, des caractéristiques mesurées pour le Data Matrix considéré.

Au cours d'une étape 330, on quantifie les caractéristiques, éventuellement on les compresse, et on détermine un vecteur de données caractéristiques représentatif des défauts.

Au cours d'une étape 335, on stocke ce vecteur de caractéristiques dans une base de données, associé à l'identifiant du message.

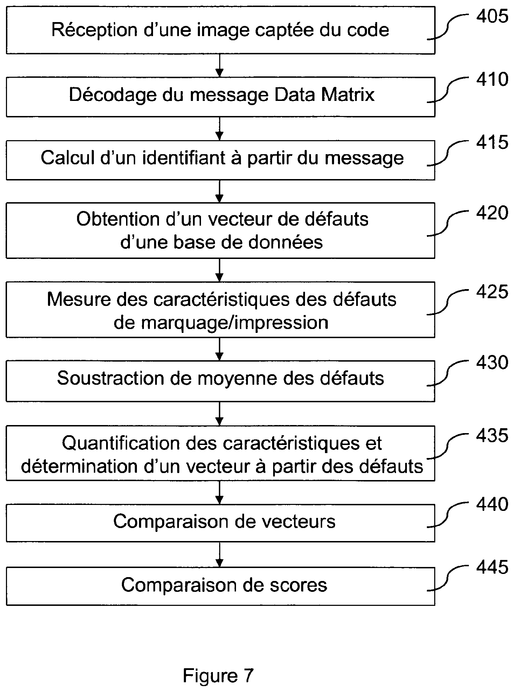

On donne, ci-dessous, en regard de la figure 7, un algorithme permettant l'authentification d'un code à barres 2D à partir de la mesure des défauts d'impression du marquage :

Au cours d'une étape 405, on reçoit une image captée contenant un code à barres.

Au cours d'une étape 410, on décode le message contenu dans le code à barres et porté par les formes et couleurs moyennes des cellules carrées. Si on ne parvient pas à le décoder, on affiche « Code-barre illisible » à l'utilisateur.

Sinon, au cours d'une étape 415, on calcule un identifiant à partir du message.

Au cours d'une étape 420, on obtient, d'une base de données, le vecteur de données correspondant à cet identifiant, ainsi qu'un seuil de décision associé à ce vecteur de caractéristiques. Si la base de données ne contient pas cet identifiant, on affiche à l'utilisateur « Code barre non-authentifié ».

Sinon, au cours d'une étape 425, on mesure les caractéristiques des défauts de marquage du code-barre.

Au cours d'une étape optionnelle 430, on soustrait la moyenne des caractéristiques pour plusieurs codes à barres, des caractéristiques mesurées pour le code à barres considéré.

Au cours d'une étape 435, on quantifie les caractéristiques, éventuellement on les compresse, et on détermine un vecteur de données représentatif des défauts.

Au cours d'une étape 440, on compare le vecteur de données extrait avec le vecteur de données obtenu de la base de données, et on mesure un indice de similarité, appelé « score ».

Au cours d'une étape 445, on compare le score mesuré au seuil de décision. S'il est supérieur, on affiche à l'utilisateur « Data Matrix authentifié ». Sinon, on affiche à l'utilisateur « Data Matrix non authentifié ». En option, on affiche à l'utilisateur chaque message lu.

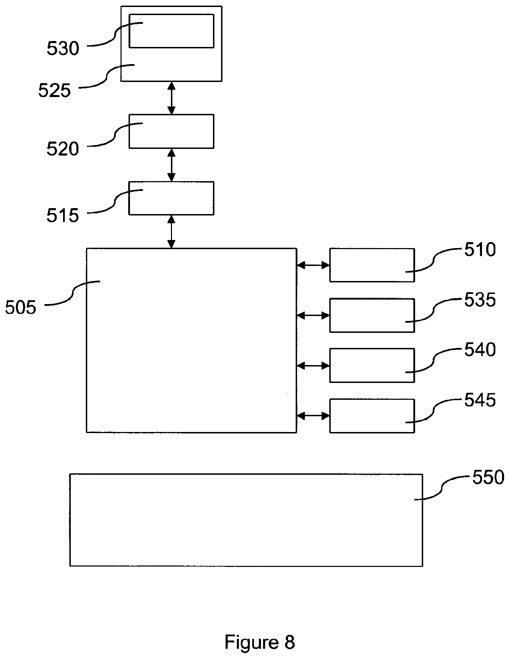

On observe, en figure 8, un terminal local 505 muni d'une imprimante 510, d'un moyen de capture d'image 535, deux capteurs 540 et 545 et d'un moyen d'accès 515 à un réseau 520 auquel est relié un serveur 525. Le serveur 525 est muni d'une base de données 530.

Le terminal local 505 est, par exemple, de type ordinateur à usage général. Il est installé sur une chaîne 550 de fabrication ou de transformation d'objets, par exemple d'emballages. La chaîne 550 comporte, par exemple, un dépileur d'objets plans (non représenté) et un convoyeur (non représenté) mettant en mouvement les objets à traiter, l'un derrière l'autre.

Le capteur 540 est positionné sur la chaîne de fabrication 550, en amont du champ optique du capteur d'image 535 et est adapté à détecter l'arrivée d'un objet à traiter. Par exemple, le capteur 540 est une cellule optique comportant un émetteur et un récepteur de rayons lumineux. Le capteur 545 est placé sur la chaîne 550 et détermine la vitesse des objets sur cette chaîne. Par exemple, le capteur 545 est relié à un automate (non représenté) régissant le fonctionnement de la chaîne 550 ou est relié à un support de déplacement des objets, par exemple une bande de convoyeur. Le terminal local 505 commande l'impression des objets par l'imprimante 510, de manière connue en soi, par exemple par jet d'encre ou par marquage laser. Le moyen d'accès 515 au réseau 520 est, par exemple, un modem de type connu, pour accès au réseau 520, par exemple le réseau Internet.

Le moyen de capture d'image 535 est, par exemple, un appareil photo numérique, un capteur linéaire ou une caméra industrielle.

Le serveur 525 est de type connu. La base de données 530 conserve, au moins, une liste d'identifiants d'objets et de vecteurs de données de défauts liés à ces objets, déterminées conformément au procédé objet de la présente invention. Préférentiellement, cette base de données 530 conserve, en relation avec chaque identifiant d'un objet, un identifiant de type d'objet et de position de zone de positionnement du code géométrique objet de la présente invention pour ce type d'objet, une identifiant du prestataire effectuant la fabrication ou la transformation.

Le terminal 505 conserve un logiciel qui, lors de son exécution, implémente des étapes d'un procédé objet de la présente invention. Le serveur 525 conserve un logiciel qui, lors de son exécution, implémente des étapes d'un procédé de stockage et de restitution de vecteurs de données de défauts.

En variante, le terminal 505 ne conserve pas de logiciel spécifique mais met en oeuvre un navigateur de la toile et un service de la toile (en anglais, « web service ») hébergé par le serveur 525.

## Revendications

1. Procédé d'authentification d'un code à zones géométriques de formes et/ou couleurs variables en fonction d'un message, qui comporte :

- une étape de génération dudit code à zones géométriques variables, en fonction d'un message pour fournir des zones géométriques,
- une étape de génération d'un code numérique authentifiant pour fournir des valeurs numériques ; **caractérisé par**
- une étape de formation d'une image dudit code à zones géométriques comportant, dans au moins une partie de ses zones géométriques et/ou dans au moins un espace entre des zones géométriques, une partie dudit code numérique authentifiant ; l'étape de formation d'une image affectant, du fait des aléas physiques de la formation d'image, la représentation du code numérique authentifiant d'un taux d'erreur supérieur à une première valeur prédéterminée et inférieure à une deuxième valeur prédéterminée.

2. Procédé selon la revendication 1, dans lequel l'étape de formation d'une image affecte, du fait des aléas physiques de la formation d'image, entre deux formations du même code à zones géométriques variables, la représentation du code numérique authentifiant d'une variation supérieure à une troisième valeur prédéterminée et inférieure à une quatrième valeur prédéterminée.

3. Procédé selon l'une des revendications 1 ou 2, dans lequel l'étape de formation d'une image affecte, du fait des aléas physiques de la formation d'image, la représentation du code numérique authentifiant d'un bruit de telle sorte que le rapport signal sur bruit de la représentation du code numérique authentifiant est inférieur à une cinquième valeur prédéterminée.

4. Procédé selon l'une des revendications 1 à 3, qui comporte, en outre :

 - une étape de détermination de conditions de formation de ladite image et
 - une étape de détermination de caractéristiques physiques de cellules d'au moins une partie du code numérique authentifiant, en fonction des conditions de formation d'image.

5. Procédé selon l'une des revendications 1 à 4, dans lequel, au cours de l'étape de génération dudit code à zones géométriques variables, les zones géométriques variables sont des barres globalement rectangulaires parallèles dont la largeur et/ou l'écartement varie en fonction dudit message.

6. Procédé selon l'une des revendications 1 à 4, dans lequel, au cours de l'étape de génération dudit code à zones géométriques variables, les zones géométriques variables sont des zones carrées insérées dans une matrice dont la couleur et/ou au moins une dimension varie en fonction dudit message.

7. Procédé selon l'une des revendications 1 à 6, dans lequel, au cours de l'étape de formation de l'image dudit code à zones géométriques comportant, dans au moins une partie de ses zones géométriques, une partie dudit code numérique authentifiant, le code numérique authentifiant prend la forme d'une variation d'au moins une dimension de zones géométriques variables.

8. Procédé selon l'une des revendications 1 à 7, dans lequel, au cours de l'étape de formation de l'image dudit code à zones géométriques comportant, dans au moins une partie de ses zones géométriques, une partie dudit code numérique authentifiant, chaque partie du code numérique authentifiant insérée dans une zone géométrique du code à zone géométriques variables, prend la forme d'une distribution de cellules rectangulaires d'au moins un ordre de grandeur plus petit que les dimensions de ladite zone géométrique, une partie desdites cellules présentant une couleur différente de celle de ladite zone géométrique.

9. Procédé selon l'une des revendications 1 à 8, dans lequel, dans chaque zone géométrique comportant une partie du code numérique authentifiant, la surface des dites cellules est inférieure à un quart de la surface de ladite zone géométrique.

10. Procédé selon l'une des revendications 1 à 9, qui comporte, en outre, une étape de détermination d'une empreinte de l'image générée, ladite empreinte étant fonction d'une dégradation du code numérique authentifiant au cours de l'étape de formation d'une image.

11. Procédé selon l'une des revendications 1 à 10, qui comporte, en outre, une étape de codage d'une information dans ledit code numérique authentifiant, ladite information étant représentative d'une mesure de dégradation du code numérique authentifiant due à des aléas physiques affectant l'image lors l'étape de formation d'une image.

**12.** Dispositif d'authentification d'un code à zones géométriques de formes et/ou couleurs variables en fonction d'un message, qui comporte :

- un moyen de génération dudit code à zones géométriques variables, en fonction d'un message adapté à fournir des zones géométriques,
- un moyen de génération d'un code numérique authentifiant adapté à fournir des valeurs numériques ; **caractérisé par**
- un moyen de formation d'une image dudit code à zones géométriques comportant, dans au moins une partie de ses zones géométriques et/ou dans au moins un espace entre des zones géométriques, une partie dudit code numérique authentifiant ; le moyen de formation d'une image affectant, du fait des aléas physiques de la formation d'image, la représentation du code numérique authentifiant d'un taux d'erreur supérieur à une première valeur prédéterminée et inférieure à une deuxième valeur prédéterminée.

**13.** Procédé d'authentification d'un code à zones géométriques de formes et/ou couleurs variables, représenté par une image captée représentative d'une image formée selon le procédé d'authentification selon l'une des revendications 1 à 11, **caractérisé en ce qu'**il comporte :

- une étape de lecture d'un message porté par les formes et couleurs moyennes des zones géométriques,
- une étape de mesure d'un niveau de dégradation d'un code numérique authentifiant représenté dans au moins une partie des zones géométriques dudit code à zones géométriques et
- une étape de détermination de l'authenticité du dit code à zones géométriques en fonction d'au moins ledit niveau de dégradation.

**14.** Dispositif d'authentification d'un code à zones géométriques de formes et/ou couleurs représenté par une image captée représentative d'une image formée selon le procédé d'authentification selon l'une des revendications 1 à 11, **caractérisé en ce qu'**il comporte :

- un moyen de lecture d'un message porté par les formes et couleurs moyennes des zones géométriques,
- un moyen de mesure d'un niveau de dégradation d'un code numérique authentifiant représenté dans au moins une partie des zones géométriques dudit code à zones géométriques et
- un moyen de détermination de l'authenticité du dit code à zones géométriques adapté à déterminer l'authenticité du dit code à zones géométriques variables en fonction d'au moins ledit niveau de dégradation.

**15.** Code à zones géométriques de formes et/ou couleurs variables en fonction d'un message, représentant :

- un message par l'intermédiaire des zones géométriques ; **caractérisé en ce qu'**il représente :
- un code numérique authentifiant, dans au moins une partie de ses zones géométriques, par une caractéristique de marquage variable en fonction dudit code numérique authentifiant, le code numérique authentifiant présentant un taux d'erreur supérieur à une première valeur prédéterminée et inférieure à une deuxième valeur prédéterminée après formation.

**Patentansprüche**

**1.** Authentifizierungsverfahren eines Codes mit geometrischen Bereichen mit in Abhängigkeit einer Nachricht variablen Formen und / oder Farben, die umfasst:

- einen Erzeugungsschritt des genannten Codes mit geometrischen Bereichen in Abhängigkeit einer Nachricht zum Liefern der geometrischen Bereiche,
- einen Erzeugungsschritt eines authentifizierenden digitalen Codes zum Liefern von digitalen Werten; **gekennzeichnet durch**
- einen Bildungsschritt eines Bildes des genannten Codes mit geometrischen Bereichen, der in wenigstens einem Teil seiner geometrischen Bereiche und / oder in wenigstens einem Raum zwischen geometrischen Bereichen einen Teil des genannten, authentifizierenden digitalen Codes umfasst;

den Bildungsschritt eines Bildes, das aufgrund der physikalischen Unwägbarkeiten der Bildbildung die Darstellung des authentifizierenden digitalen Codes einer Fehlerquote beeinflusst, die höher ist als ein erster vorbestimmter Wert und niedriger als ein zweiter vorbestimmter Wert.

2. Verfahren gemäß Anspruch 1, bei dem der Bildungsschritt eines Bildes aufgrund der physikalischen Unwägbarkeiten der Bildbildung zwischen zwei Bildungen desselben Codes mit variablen geometrischen Bereichen die Darstellung des authentifizierenden digitalen Codes einer Abweichung beeinflusst, die höher ist als ein dritter vorbestimmter Wert und niedriger als ein vierter vorbestimmter Wert.

3. Verfahren gemäß irgendeinem der Ansprüche 1 oder 2, bei dem der Bildungsschritt eines Bildes aufgrund der physikalischen Unwägbarkeiten der Bildformung die Darstellung des authentifizierenden digitalen Codes eines Geräuschs derart beeinflusst, dass das Verhältnis Signal / Geräusch der Darstellung des authentifizierenden digitalen Codes niedriger ist als ein vorbestimmter fünfter Wert.

4. Verfahren gemäß einem der Ansprüche 1 bis 3, das darüber hinaus umfasst:

   - einen Bestimmungsschritt der Bildungsbedingungen des genannten Bildes und
   - einen Bestimmungsschritt der physikalischen Merkmale von Zellen wenigstens eines Teils des authentifizierenden digitalen Codes in Abhängigkeit von den Bildungsbedingungen des Bildes.

5. Verfahren gemäß irgendeinem der Ansprüche 1 bis 4, bei dem im Verlauf des Erzeugungsschritts des genannten Codes mit geometrischen variablen Bereichen die geometrischen variablen Bereiche Striche sind, die insgesamt rechteckig parallel sind, deren Breite und / oder Beabstandung in Abhängigkeit von der genannten Nachricht variiert.

6. Verfahren gemäß einem der Ansprüche 1 bis 4, bei dem im Verlauf des Erzeugungsschritts des genannten Codes mit geometrischen variablen Bereichen die geometrischen variablen Bereiche quadratische Bereiche sind, die in einer Matrix eingefügt sind, deren Farbe und / oder wenigstens eine Abmessung in Abhängigkeit von der genannten Nachricht variiert.

7. Verfahren gemäß irgendeinem der Ansprüche 1 bis 6, bei dem im Verlauf des Bildungsschritts des Bildes des genannten Codes mit geometrischen Bereichen in wenigstens einem Teil seiner geometrischen Bereiche einen Teil des genannten authentifizierenden digitalen Codes umfasst, wobei der authentifizierende digitale Code die Form einer Abwandlung wenigstens einer Abmessung von variablen geometrischen Bereichen annimmt.

8. Verfahren gemäß einem der Ansprüche 1 bis 7, bei dem im Verlauf des Bildungsschritts des Bildes des genannten Codes mit geometrischen Bereichen, die in wenigstens einem Teil seiner geometrischen Bereiche einen Teil des genannten authentifizierenden digitalen Codes umfassen, wobei jeder Teil des authentifizierenden digitalen Codes, der in einen geometrischen Bereich des Codes mit variablem geometrischem Bereich eingefügt ist, die Form einer Verteilung von rechteckigen Zellen wenigstens einer Größenordnung annimmt, die kleiner ist als die Abmessungen des genannten geometrischen Bereichs, wobei ein Teil der genannten Zellen eine unterschiedliche Farbe von der des genannten geometrischen Bereichs annimmt.

9. Verfahren gemäß irgendeinem der Ansprüche 1 bis 8, bei dem in jedem geometrischen Bereich, der einen Teil des authentifizierenden digitalen Codes umfasst, die Oberfläche der genannten Zellen kleiner ist als ein Viertel der Oberfläche des genannten geometrischen Bereichs.

10. Verfahren gemäß einem der Ansprüche 1 bis 9, das darüber hinaus einen Bestimmungsschritt eines Abdrucks des erzeugten Bildes umfasst, wobei der genannte Abdruck von einer Degradierung des authentifizierenden digitalen Codes im Verlauf des Bildungsschritts eines Bildes abhängt.

11. Verfahren gemäß einem der Ansprüche 1 bis 10, das darüber hinaus einen Kodierungsschritt einer Information in dem genannten authentifizierenden digitalen Code umfasst, wobei die genannte Information eine Degradierungsmessung des authentifizierenden digitalen Codes aufgrund der physikalischen Unwägbarkeiten darstellt, die das Bild beim Bildungsschritt eines Bildes beeinflussen.

12. Authentifizierungsvorrichtung eines Codes mit geometrischen Bereichen mit in Abhängigkeit einer Nachricht variablen Formen und / oder Farben, die umfasst:

   - ein Erzeugungsmittel des genannten Codes mit geometrischen Bereichen, die in Abhängigkeit von einer Nachricht variabel sind, die zum Liefern geometrischer Bereiche geeignet ist,
   - ein Erzeugungsmittel eines authentifizierenden digitalen Codes, das geeignet ist, digitale Werte zu liefern; **gekennzeichnet durch**

- ein Bildungsmittel eines Bildes des genannten Codes mit geometrischen Bereichen, umfassend in wenigstens einem Teil seiner geometrischen Bereiche und / oder in wenigstens einem Raum zwischen den geometrischen Bereichen einen Teil des authentifizierenden digitalen Codes;

wobei das Bildungsmittel eines Bildes aufgrund der physikalischen Unwägbarkeiten der Bildbildung die Darstellung des authentifizierenden digitalen Codes einer Fehlerquote beeinflusst, die größer ist als ein erster vorbestimmter Wert und kleiner als ein zweiter vorbestimmter Wert.

13. Authentifizierungsverfahren eines Codes mit geometrischen Bereichen mit variablen Formen und / oder Farben, das durch ein erfasstes Bild dargestellt ist, das ein Bild darstellt, welches gemäß dem Authentifizierungsverfahren gemäß einem der Ansprüche 1 bis 11 geformt ist, **dadurch gekennzeichnet, dass** es umfasst:

- einen Leseschritt einer Nachricht, die von den durchschnittlichen Formen und Farben der geometrischen Bereiche getragen ist,
- einen Messschritt eines Degradierungsniveaus eines authentifizierenden digitalen Codes, der in wenigstens einem Tel der geometrischen Bereiche des genannten Codes mit geometrischen Bereichen dargestellt ist und
- einen Bestimmungsschritt der Authentizität des genannten Codes mit geometrischen Bereichen in Abhängigkeit wenigstens des genannten Degradierungsniveaus.

14. Authentifizierungsvorrichtung eines Codes mit geometrischen Formen und / oder Farben, das durch ein erfasstes Bild dargestellt ist, das ein Bild darstellt, welches gemäß dem Authentifizierungsverfahren gemäß einem der Ansprüche 1 bis 11 geformt ist, **dadurch gekennzeichnet, dass** es umfasst:

- ein Lesemittel einer Nachricht, die von den durchschnittlichen Formen und Farben der geometrischen Bereiche getragen ist,
- ein Messmittel eines Degradierungsniveaus eines authentifizierenden digitalen Codes, das in wenigstens einem Teil der geometrischen Bereiche des genannten Codes mit geometrischen Bereichen dargestellt ist, und
- ein Bestimmungsmittel der Authentizität des genannten Codes mit geometrischen Bereichen, das zum Bestimmen der Authentizität des genannten Codes mit variablen geometrischen Bereichen in Abhängigkeit wenigstens des genannten Degradierungsniveaus geeignet ist.

15. Code mit geometrischen Bereichen mit in Abhängigkeit von einer Nachricht variablen Formen und / oder Farben, der darstellt:

- eine Nachricht mittels geometrischer Bereiche; **dadurch gekennzeichnet, dass** sie darstellt:
- einen authentifizierenden digitalen Code in wenigstens einem Teil seiner geometrischen Bereiche durch ein Kennzeichnungsmerkmal, das in Abhängigkeit von dem genannten authentifizierenden digitalen Code variabel ist,
wobei der authentifizierende digitale Code eine Fehlerquote aufweist, die höher ist als ein erster vorbestimmter Wert und kleiner als ein zweiter vorbestimmte Wert nach der Bildung.


**Claims**

1. Method for authenticating a code with geometric areas whose shapes and/or colors vary according to a message, which method comprises:

- a step of generating said code with variable geometric areas according to a message to provide geometric areas;
- a step of generating a digital authentication code to provide numeric values; **characterized by**
- a step of forming an image of said code with geometric areas comprising, in at least one portion of its geometric areas and/or in at least one space between geometric areas, a portion of said digital authentication code;

the step of forming an image affecting, because of physical uncertainties inherent to image formation, the representation of the digital authentication code with an error rate which is higher than a first predefined value and lower than a second predefined value.

2. Method according to claim 1, wherein, the step of forming an image affects, because of physical uncertainties inherent to image formation, the image formation step affects, between two formations of a same code with variable geometric areas, the representation of the digital authentication code with a variation which is higher than a third predefined value and lower than a fourth predefined value.

3. Method according to one of claims 1 or 2, wherein, step of forming an image affects; because of physical uncertainties inherent to image formation, the representation of the digital authentication code with noise, such that the signal to noise ratio of the representation of the digital authentication code is lower than a fifth predefined value.

4. Method according to one of claims 1 to 3, which also comprises:

   - a step of determining the conditions for forming said image; and
   - a step of determining the physical characteristics of cells of at least one portion of the digital authentication code, depending on the image formation conditions.

5. Method according to one of claims 1 to 4, wherein, during the step of generating said code with variable geometric areas, the variable geometric areas are generally parallel rectangular bars whose width and/or spacing varies according to said message.

6. Method according to one of claims 1 to 4, wherein, during the step of generating said code with variable geometric areas, the variable geometric areas are square areas inserted into a matrix whose color and/or at least one dimension vary according to said message.

7. Method according to one of claims 1 to 6, wherein, during the step of forming the image of said code with geometric areas comprising a portion of said digital authentication code in at least one portion of its geometric areas, the digital authentication code takes the form of a variation of at least one dimension of the variable geometric areas.

8. Method according to one of claims 1 to 7, wherein, during the step of forming the image of said code with geometric areas comprising a portion of said digital authentication code in at least one portion of its geometric areas, each portion of the digital authentication code inserted into a geometric area of the code with variable geometric areas takes the form of a distribution of rectangular cells at least one order of magnitude smaller than the dimensions of said geometric area, a portion of said cells having a color different from that of said geometric area.

9. Method according to one of claims 1 to 8, wherein, in each geometric area comprising a portion of the digital authentication code, the surface area of said cells is less than a quarter of the surface area of said geometric area.

10. Method according to one of claims 1 to 9, which also comprises a step of determining an imprint of the generated image, said imprint being a function of a degradation of the digital authentication code during the step of forming an image.

11. Method according to one of claims 1 to 10, which also comprises a step of encoding an item of information into said digital authentication code, said item of information being representative of a measurement of the degradation of the digital authentication code due to physical uncertainties that affect the image during the step of forming an image.

12. Device for authenticating a code with geometric areas whose shapes and/or colors vary according to a message, which comprises:

   - a means for generating said code with variable geometric areas, according to a message designed to provide geometric areas;
   - a means for generating a digital authentication code designed to provide numeric values; **characterized by**
   - a means for forming an image of said code with geometric areas comprising, in at least one portion of its geometric areas and/or in at least one space between geometric areas, a portion of said digital authentication code;

   the means for forming an image affecting, because of physical uncertainties inherent to image formation, the representation of the digital authentication code with an error rate which is higher than a first predefined value and lower than a second predefined value.

13. Method for authenticating a code with geometric areas whose shapes and/or colors vary, represented by a captured image, representative of an image formed according to the authentication method according to one of claims 1 to 11, **characterized in that** it comprises:

- a step of reading a message carried by the mean shapes and colors of the geometric areas;
- a step of measuring a level of degradation of a digital authentication code, represented in at least one portion of the geometric areas of said code with geometric areas; and
- a step of determining the authenticity of said code with geometric areas, based on at least said level of degradation.

14. Device for authenticating a code with geometric areas with shapes and/or colors, represented by a captured image, representative of an image formed according to the authentication method according to one of claims 1 to 11, **characterized in that** it comprises:

- a means for reading a message carried by the mean shapes and colors of the geometric areas;
- a means for measuring a level of degradation of a digital authentication code, represented in at least one portion of the geometric areas of said code with geometric areas; and
- a means for determining the authenticity of said code with geometric areas designed to determine the authenticity of said code with variable geometric areas based on at least said level of degradation.

15. Code with geometric areas whose shapes and/or colors vary according to a message, representing:

- a message via the geometric areas, **characterized in that** it represents:
- a digital authentication code, in at least one portion of its geometric areas, using a characteristic marking that varies depending on said digital authentication code;
the digital authentication code having an error rate which is higher than a first predefined value and lower than a second predefined value.

Figure 1A

Figure 1B

160

Figure 2A

160

Figure 2B

Figure 3A

Figure 3B

Réception de message(s), clé(s), taille physique
et résolution d'impression                          ⌐ 105

Détermination de message codé pour le CNA        ⌐ 110

Génération d'un Data Matrix
à partir de message(s)                              ⌐ 115

Détermination du nombre de cellules du
Data Matrix disponibles pour le CNA                ⌐ 120

Détermination du nombre d'éléments du CNA         ⌐ 125

Détermination de valeur
de chaque élément du CNA                           ⌐ 130

Création d'image numérique du Data Matrix
incorporant le CNA                                 ⌐ 135

Impression ou marquage de l'image                 ⌐ 140

Figure 4

| | |
|---|---|
| Réception d'une image captée du code | 205 |
| ↓ | |
| Décodage du message Data Matrix | 210 |
| ↓ | |
| Détermination si message correctement lu ; sinon, non authentique | 215 |
| ↓ | |
| Création d'une image du Data Matrix | 220 |
| ↓ | |
| Détermination du nombre de cellules disponibles pour le CNA dans le Data Matrix | 225 |
| ↓ | |
| Détermination de la position de chaque élément du CNA dans l'image | 230 |
| ↓ | |
| Extraction, dans l'image, des valeurs des éléments du CNA | 235 |
| ↓ | |
| Décodage du message du CNA | 240 |
| ↓ | |
| Détermination d'un score lié à dégradation du CNA | 245 |
| ↓ | |
| Vérification de corrélation de messages | 250 |
| ↓ | |
| Comparaison de score à une valeur limite d'authenticité | 255 |

Figure 5

| Réception d'une image captée du code | 305 |
|---|---|
| Décodage du message Data Matrix | 310 |
| Détermination d'un identifiant à partir du message décodé | 315 |
| Mesure des caractéristiques des défauts de marquage/impression | 320 |
| Soustraction de moyenne des défauts | 325 |
| Quantification des caractéristiques et détermination d'un vecteur à partir des défauts | 330 |
| Stockage du vecteur | 335 |

Figure 6

Réception d'une image captée du code — 405

Décodage du message Data Matrix — 410

Calcul d'un identifiant à partir du message — 415

Obtention d'un vecteur de défauts
d'une base de données — 420

Mesure des caractéristiques des défauts
de marquage/impression — 425

Soustraction de moyenne des défauts — 430

Quantification des caractéristiques et
détermination d'un vecteur à partir des défauts — 435

Comparaison de vecteurs — 440

Comparaison de scores — 445

Figure 7

530
525

520

515

505

510

535

540

545

550

Figure 8

180

Figure 9A

180

Figure 9B

Performance de
détection de copie

Rapport signal sur bruit

Figure 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20080252066 A
- US 2008110990 A
- WO 2008003964 A